# EUROPÄISCHE PATENTSCHRIFT

(11) **EP 2 431 152 B1**
(45) Veröffentlichungstag und Bekanntmachung des Hinweises auf die Patenterteilung: **24.05.2017**
(21) Anmeldenummer: 11175971.8
(22) Anmeldetag: 29.07.2011
(51) Int. Cl.: B29C 47/26, B29C 47/08, B29C 47/02, B29C 47/86, B29C 47/10, B29C 47/06

(54) **Verfahren zum Herstellen von versteiften Kunststoff-Hohlprofilen sowie Extrusionswerkzeugdüse**
Method and extrusion nozzle for producing reinforced hollow plastic profiles
Procédé de fabrication de profilés renforcés en matière synthétique et filière d'extrusion

(30) Priorität: 29.07.2010 DE 102010036733; 29.07.2010 DE 102010036735
(43) Veröffentlichungstag der Anmeldung: 21.03.2012
(73) Patentinhaber: aluplast GmbH, 76227 Karlsruhe (DE)
(72) Erfinder: Englender, Claude, 67930 Beinheim (DE); Schaaf, Alexander, 76437 Rastatt (DE); Mölter, Ben, 76474 Au am Rhein (DE); Krell, Rüdiger, 76307 Karlsbad-Auerbach (DE); Mosquera, Alfonso, 67660 Betschdorf (DE); Heilig, Andreas, 76676 Graben-Neudorf (DE)
(74) Vertreter: Stoffregen, Hans-Herbert

(56) Entgegenhaltungen:
- WO-A1-01/24993
- WO-A2-2009/136750
- DE-A1- 2 138 427
- DE-A1- 3 824 181
- DE-A1-102009 051 058
- US-A- 3 416 982
- US-A- 5 096 646
- US-A- 5 482 667

## Beschreibung

Die Erfindung bezieht sich auf ein Verfahren zum Herstellen von versteiften Kunststoff-Hohlprofilen in einem Co-Extrusionsverfahren, wobei schmelzflüssiges thermoplastisches erstes Kunststoffmaterial, wie PVC, einer Extrusionswerkzeugdüse zugeführt wird und eine aus einem zweiten Kunststoffmaterial, wie Polybuthylenterephthalat (PBT), Polyethylenterephthalat (PET) oder Mischungen dieser bestehende Armierung in der Extrusionswerkzeugdüse dem Hohlprofil zugeführt wird, von dem die Armierung bereichsweise kraft- und formschlüssig umgeben wird.

Bei einer Co-Extrusion von PVC-ähnlichen oder gleichartigen Werkstoffen kommen z. B. folgende Materialien in Frage: Rein-PVC und Reyclat-PVC, PVC-ASA/PMMA/Deckschicht, Rein-PVC und PVC-GF, PVC und PVC-P (weich). Auch ist eine Post-Co-Extrusion von PVC und PVC-P bekannt.

Um z. B. Aluminium-Profile mit PVC zu ummanteln, können Kreuz- oder Querspritzköpfe verwendet werden, bei denen die Fremdwerkstoffzuführung quer zur Extrusionsrichtung verläuft. Mit Ummantelungsköpfen können z. B. Drähte oder Bänder mit PVC ummantelt werden, wobei die Fremdwerkstoffzuführung, also Drähte oder Bänder in Extrusionsrichtung erfolgt.

Soll eine Co-Extrusion von Kunststoffen erfolgen, ist die Auswahl der Werkstoffe grundsätzlich stark eingeschränkt, da Materialien mit gleichen Temperaturverarbeitungsbereichen zu verwenden sind, also im Falle von PVC als eines der Kunststoffmaterialien bei einer Temperatur bis maximal 210 °C. Bei Materialien gleicher Verarbeitungstemperaturen erfolgt eine stoffliche Verbindung wie Verschmelzen oder Verschweißen.

Kreuzköpfe oder Querspritzköpfe bzw. Ummantelungsköpfe haben einen erhöhten Platzbedarf in der Fertigung zur Folge. Volumenummantelungen haben beim Recycling Nachteile.

Aus der WO-A-2009/098069 ist ein Profil für Fenster- oder Türrahmen bekannt, das aus einem mehrkammerigen extrudierten Hohlprofil aus thermoplastischem Kunststoff wie PVC und einer leistenförmigen Armierung besteht, die formschlüssig mit dem Hohlprofil verbunden ist. Die Armierung besteht im Wesentlichen aus Polybuthylenterephthalat (PBT), Polyethylenterephthalat (PET) oder Mischungen dieser und kann eine Faserverstärkung aufweisen. Das schmelzflüssige thermoplastische Material für das Hohlprofil und die eigensteife Armierung, die als Rollenware oder Endlosband zur Verfügung steht, werden einer Extrusionswerkzeugdüse - auch Extrusionsdüse genannt - zugeführt. Die Zuführung der Armierung, also Fremdwerkstoffzuführung ist integraler Bestandteil der Extrusionsdüse, die aus einzelnen Düsenplatten oder -segmenten zusammengesetzt ist, die ihrerseits Durchgangsöffnungen aufweisen, die bei zusammengesetzter Extrusionsdüse die Kanäle für den Fremdwerkstoff und das thermoplastische Material bilden.

Da die Armierung im festen Zustand der Extrusionsdüse zugeführt wird, tritt in dem die Armierung führenden Kanal ein Abrieb auf. Ferner hat die Praxis gezeigt, dass zwischen den Kanälen eine hinreichende Abdichtung nicht erfolgt, so dass das thermoplastische Material in den den Fremdwerkstoff führenden Kanal eindringt. Dies hat zur Folge, dass der Fremdwerkstoffzuführungskanal im Vergleich zu Extrusionsdüsen, in denen ausschließlich schmelzflüssige thermoplastische Materialien extrudiert werden, häufiger gereinigt werden muss. Übliche Reinigungszeiten belaufen sich dabei auf drei bis vier Stunden. Ferner sind Abkühl- und Aufheizzeiten der Düse zu beachten, so dass über eine relativ lange Zeit eine entsprechende Extrusionsdüse und damit -anlage nicht genutzt werden kann.

Der WO-A-01/24993 ist ein Verfahren zur Herstellung eines Kunststoffprofils zu entnehmen, das eine Armierung aus Glasfasern aufweist. Hierzu werden die Glasfasern zunächst erwärmt und mit einem Polymer imprägniert, um sodann einem Extrusionswerkzeug zugeführt zu werden, in dem die imprägnierten Fasern z. B. mit PVC umspritzt werden.

Die Herstellung eines Gummischlauchs wird in der US-A-5,096,646 beschrieben, der von einem Kunststoffüberzug umgeben ist.

Ein Kunstholzprodukt nach der WO-A-2009/136750 weist eine Innen- und eine Außenschicht auf.

Zur Herstellung eines Rohres werden nach der US-A-3,416,982 Hart- und Weich-PVC gemeinsam extrudiert. Dabei wird das Hart-PVC spiralförmig in das Weich-PVC eingebracht.

Ein Verfahren zur Herstellung von thermoplastischen Prepregs ist aus der DE-A-38 24 181 bekannt. Dabei wird eine Fadenschicht einem Extrusionswerkzeug zugeführt und die Fadenschicht von der Kunststoffschmelze ummantelt.

Die DE-A-21 38 427 bezieht sich auf ein Verfahren zur Herstellung von armierten Plastmassen-Gegenständen. Dabei wird ein Rohr von einem Armierungsmaterial ummantelt, das seinerseits von einem Plastmassen-Mantel umgeben wird.

Die DE-A-10 2009 051 058 hat ein Verfahren zur Herstellung eines faserverstärkten Extrusionsprofils zum Gegenstand. Dabei werden Faser-Matrix-Halbzeuge vorerwärmt und sodann in eine Basis-Kunststoff-Matrix einextrudiert.

Die US-A-5 482 667 bezieht sich auf ein durch Formpressen hergestelltes Formteil. Der Pressform werden dabei mit Thermoplast imprägnierte Kunststofffasern zugeführt.

Der vorliegenden Erfindung liegt die Aufgabe zu Grunde, ein Verfahren der eingangs genannten Art so weiterzubilden, dass ein erstes Kunststoffmaterial, wie PVC, und ein zweites Kunststoffmaterial, wie PBT oder PET oder Kombinationen dieser, in einem komplexen Hohlkammerprofil kombiniert werden können, ohne dass es eines erhöhten Platzes bei der Fertigung bedarf. Auch soll die Möglichkeit bestehen, das zweite Kunststoffmaterial auch bei geringer Kontaktfläche mit dem ersten Kunststoffmaterial in hinreichendem Umfang mit diesem zu verbinden.

Verfahrensmäßig wird erfindungsgemäß im Wesentlichen vorgeschlagen, dass eine eigensteifte Armierung über einen Kanal bei Umgebungsdruck der Extrusionsdüse zugeführt wird, dass die Armierung vor Eintritt in die Extrusionswerkzeugdüse unter Beibehaltung der Eigensteifigkeit temperiert wird, dass die eigensteife Armierung in der Extrusionswerkzeugdüse dem ersten Kunststoffmaterial zugeführt wird, wobei die eigensteife Armierung, die eine höhere Verarbeitungstemperatur als das erste Kunststoffmaterial aufweist, beim Zuführen zu dem schmelzflüssigen thermoplastischen ersten Kunststoffmaterial eine Temperatur aufweist mit T₂ - 10 K ≤ T₁ ≤ T₂ mit T₂ = Temperatur des ersten Kunststoffmaterials beim Eintritt der Armierung.

Erfindungsgemäß wird die eigensteife Armierung, deren Verarbeitungstemperatur oberhalb der des ersten Kunststoffmaterials liegt, derart vorerwärmt, dass diese beim Zusammenführen zu dem innerhalb der Extrusionswerkstoffdüse zu formenden ersten Kunststoffmaterial in etwa dessen Verarbeitungstemperatur aufweist, so dass keine Wärmeabfuhr aus dem ersten Kunststoffmaterial in einem Umfang erfolgt, dass das armierungsseitig verlaufende erste Kunststoffmaterial früher abkühlt als das fernliegende Kunststoffmaterial; denn anderenfalls könnte der gewünschte Formschluss zwischen der Armierung und dem ersten Kunststoffmaterial, die zu der form- und kraftschlüssigen Verbindung führt, nicht im erforderlichen Umfang erfolgen.

Die Erfindung sieht demnach vor, dass das erste Kunststoffmaterial nach Zuführen der Armierung derart abgekühlt wird, dass armierungsseitiges Kunststoffmaterial später abkühlt als armierungsfernliegendes Kunststoffmaterial. Dieses gezielte Abkühlen wird beim Auslegen der Düse unter Berücksichtigung des Temperatur- und Druckmanagements sichergestellt. Temperatureinstellung der Düse und Strömungs- bzw. Druckverhalten des Kunststoffmaterials in den ersten Kanälen wird entsprechend berücksichtigt. Ferner wird das zu extrudierende Profil derart gestaltet, dass im Bereich der Armierung Materialanhäufungen des ersten Kunststoffmaterials wie PVC vermieden werden.

Die Armierung, die vorzugsweise eine Band- oder Streifengeometrie mit in ihren Längsrändern verlaufende Verdickungen aufweist, kann somit ausschließlich in ihren Längsrandbereichen von dem ersten Kunststoffmaterial umgeben und von diesen kraft-und formschlüssig fixiert werden. Hierzu kann der Längsrandbereich nicht nur hammerförmig vergrößert sein, sondern es kann auch eine Strukturierung insbesondere lamellenartige Struktur vorgesehen sein, um die Kontaktfläche zwischen dem ersten Kunststoffmaterial und der Armierung zu erhöhen. Somit erfolgt beim Aufschrumpfen des ersten Kunststoffmaterials eine hinreichende Verzahnung mit der Folge, dass eine sichere Fixierung der Armierung in dem Hohlprofil erfolgt.

Um das zweite Kunststoffmaterial im erforderlichen Umfang zu erwärmen, ist vorgesehen, dass die Armierung mittels Heizstrahler, Mikrowelle, Heißluft, Heizspiegel oder Induktionsheizung vorerwärmt wird. Andere bekannte Möglichkeiten kommen gleichfalls in Frage.

Des Weiteren und in Abweichung von bekannten Verfahren und Konstruktionen, bei denen ein erstes Kunststoffmaterial mit einem Fremdwerkstoff co-extrudiert wird, das eine abweichende höhere Verarbeitungstemperatur von mehr als 10 °C, insbesondere im Bereich von 40 °C bis 50 °C aufweist, wird die Armierung innerhalb der Extrusionswerkzeugdüse tangential an die Extrusionsrichtung des ersten Kunststoffmaterials angenähert, wobei die entsprechenden Kanäle vor dem Zusammenführen über eine Länge L parallel oder in etwa parallel zueinander verlaufen, die 0,5 bis 10 % der Düsenlänge entsprechen sollte. Düsenlänge ist dabei der Abstand zwischen Austrittsöffnung des extrudierten Profils und rückseitigem Extruderflansch.

Ferner wird der die Armierung führende Kanal über eine Länge zwischen 10 % und 90 % der Länge der Düse innerhalb dieser geführt, und zwar betrachtet in Projektionsrichtung der Düsenlängsachse. Die tatsächliche Länge ist dementsprechend in Abhängigkeit von dem gebogenen Verlauf des zweiten Kanals innerhalb der Düse länger.

Des Weiteren wird der die Armierung führende Kanal tangential an den ersten Kanal herangeführt, wobei die Länge des Bereichs des zweiten Kanals, wiederum betrachtet in Projektion auf die Längsachse der Düse, in dem das tangentiale Heranführen erfolgt, 10 % bis 60 % der Düsenlänge betragen sollte, und zwar von dem Punkt an, von dem die von dem zweiten Kanal ausgehende Tangente die Längsachse der Düse unter einem Winkel α mit 70° ≤ α ≤ 80° schneidet.

Durch diese Dimensionierungen ist sichergestellt, dass die Armierung - ungeachtet deren Steifigkeit - problemlos durch den zweiten Kanal geführt wird, wobei der zweite Kanal im Bereich des tangentialen Heranführens, also über die Länge von vorzugsweise 10 % bis 80 % der Gesamtlänge der Düse, betrachtet in Projektion auf deren Längsachse, mit Spiel in dem zweiten Kanal geführt wird, um einen Abrieb zu vermeiden bzw. zu minimieren. Demgegenüber wird die Armierung in dem Bereich des zweiten Kanals, in dem dieser parallel zu dem ersten Kanal läuft, im Wesentlichen spielfrei geführt. Daher wird zumindest in diesem Bereich der zweite Kanal in Abhängigkeit von dem zweiten zu erwartenden Verschleiß ausgelegt. Insbesondere kommt gehärteter Stahl in Frage.

Erfindungsgemäß kann die Begrenzung des zweiten Kanals abschnittsweise aus unterschiedlichen Materialien bestehen. Dies wird aufgrund eines eigenerfinderischen Lösungsvorschlags ermöglicht, indem der zweite Kanal zumindest abschnittsweise innerhalb von Einsätzen verläuft, die in die Düse bzw. deren Segmentplatten eingesetzt werden.

Insbesondere ist vorgesehen, dass das Material der Armierung aus PVC, PET oder PBT besteht, vorzugsweise jeweils faserverstärkt, wobei als Fasern inbesondere Glasfasern in Frage kommen.

Als erstes Kunststoffmaterial kommt jedes geeignete zu extrudierende thermoplastische Material, insbesondere PVC in Frage.

Sofern das Material der Armierung aus PBT oder PET besteht, beträgt die Länge des zweiten Kanals innerhalb der Düse, betrachtet in Projektion auf die Längsachse der Düse, 40 % bis 80 % der Länge der Düse.

Die Temperatur, mit der die Armierung in die Düse eintritt, um sodann beim Zusammenführen mit dem ersten Kunststoffmaterial dessen Temperatur aufzuweisen bzw. in etwa dessen Temperatur aufzuweisen, hängt von der Wärmeleitfähigkeit des Armierungsmaterials, von der Verweilzeit der Armierung in der Düse und von der Massentemperatur des ersten Kunststoffmaterials ab.

Insbesondere wird die Armierung außerhalb der Extrusionswerkzeugdüse derart erwärmt, dass die Armierung beim Eintritt in die Düse eine Temperatur T₁ mit T₂ - 40 K ≤ T₁ ≤ T₂ mit T₂ = Verarbeitungstemperatur des ersten Kunststoffmaterials aufweist.

Des Weiteren ist vorgesehen, dass die Armierung am Kontaktpunkt mit dem ersten Kunststoffmaterial, also beim Zusammenführen von Armierung und dem ersten Kunststoffmaterial, eine Temperatur T₃ aufweist, wobei T2 ≤ T₃ ≤ T2 + 10 K ist.

Weitere Einzelheiten, Vorteile und Merkmale der Erfindung ergeben sich nicht nur aus den Ansprüchen, die diesen zu entnehmenden Merkmalen -für sich und/oder in Kombination-, sondern auch aus der nachfolgenden Beschreibung bevorzugter Ausführungsbeispiele.

Es zeigen:
- Fig. 1: einen Ausschnitt einer Extrusionsanlage in Prinzipdarstellung,
- Fig. 2: einen Ausschnitt aus einer Extrusionswerkzeugdüse, rein prinzipiell,
- Fig. 3: eine ordnungsgemäße Kontaktstelle zwischen einem ersten und einem zweiten Kunststoffmaterial,
- Fig. 4: eine weitere Kontaktstelle zwischen dem ersten und zweiten Kunststoffmaterial,
- Fig. 5: eine Prinzipdarstellung einer Extrusionswerkzeugdüse mit zwei ersten Kanälen,
- Fig. 6: einen ersten Einsatz,
- Fig. 7: einen zweiten Einsatz,
- Fig. 8: einen Ausschnitt einer zweiten Ausführungsform einer Extrusionswerkzeugdüse mit einem ersten Kanal und zwei zweiten Kanälen,
- Fig. 9: ein Detail der Fig. 8 und
- Fig. 10: eine Prinzipdarstellung einer Düse mit erstem und zweitem Kanal.

In den Figuren sind grundsätzlich gleiche Elemente mit gleichen Bezugszeichen versehen.

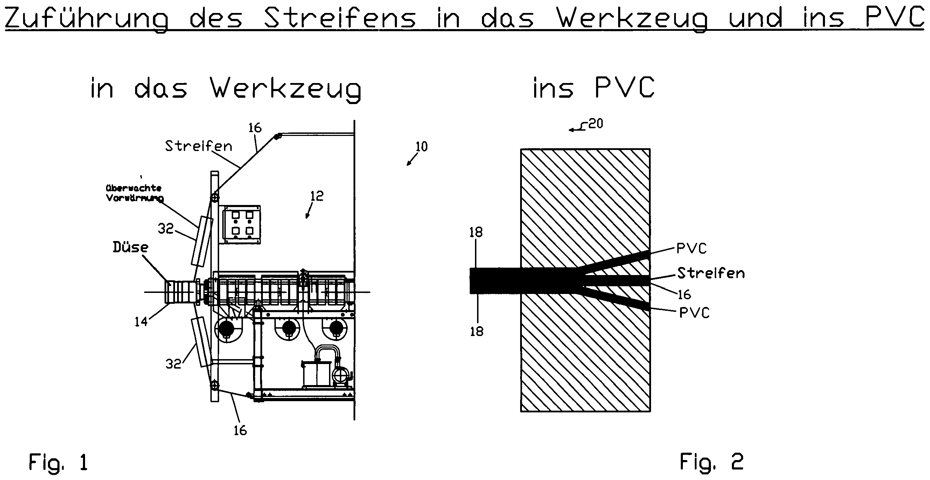

In den Fig. 1 und 2 ist im Ausschnitt und rein prinzipiell eine Extrusionsanlage 10 mit Extruder 12 sowie an diesem angeflanschter Extrusionswerkzeugdüse 14 dargestellt, von der ein Ausschnitt der Fig. 2 zu entnehmen ist.

Über den Extruder 12 wird schmelzflüsiges erstes Kunststoffmaterial vorzugsweise in Form von PVC unter Druck der Extrusionsdüse 14 zugeführt, die die Funktion einer Formgebungseinrichtung aufweist. Mit der Extrusionswerkzeugdüse 14 kann ein Hohlkammer-Profil wie Tür- oder Fensterprofil extrudiert werden, wie dieses der WO-A-2009/098069 zu entnehmen ist, auf deren Offenbarung ausdrücklich Bezug genommen wird.

Damit das Hohlkammerprofil versteift wird, wird innerhalb des Werkzeugs, also der Düse 14, in das erste Kunststoffmaterial, d. h. dessen Schmelze 18 eine vorzugsweise streifen- oder bandförmige Armierung 16 einextrudiert. Die Armierung 16 besteht aus einem zweiten Kunststoffmaterial, dessen Verarbeitungstemperatur oberhalb der des ersten Kunststoffmaterials liegt, aus dem das Hohlkammer-Profil hergestellt wird, also insbesondere PVC. Bei dem Material der Armierung 16 handelt es sich insbesondere um Polybuthylenterephthalat (PBT), Polyethylenterephthalat (PET) oder Mischungen dieser, die ggfs. eine Faserverstärkung aufweisen. Auch faserverstärktes wie glasfaserverstärktes PVC kommt in Frage.

Die Armierung 16 wird in einem gesonderten Extrusionsprozess hergestellt und liegt bevorzugterweise auf einem Wickel vor, von dem die Armierung 16 abgezogen wird, um in die Düse 14 eingeführt zu werden.

Wie sich aus der Fig. 2 ergibt, wird die Armierung 16, also das streifenförmige Material tangential an die Extrusionsrichtung 20 der Werkstoffschmelze 18 des ersten Kunststoffmaterials wie PVC-Schmelze angenähert, wobei ein Einextrudieren in das schmelzflüssige PVC-Material kurz vor Austrittsöffnung der Düse 14 erfolgt. Das Zuführen der Armierung 16, die in einem Kanal in der Düse geführt wird, erfolgt unter Umgebungsdruck, so dass beim Einführen in die Schmelze 18 eine hinreichende Abdichtung erfolgen muss, da die Kunststoffschmelze 18 unter einem Druck von ca. 350 bis 400 bar durch die Düse 14 gedrückt wird. Die Abdichtung erfolgt dadurch, dass die Armierung dicht in einem Kanal geführt wird, so dass ein Eindringen von Schmelze nicht möglich ist bzw. durch den Transport in die Armierung ggfs. eingedrungene Schmelze von der Armierung mitgenommen wird.

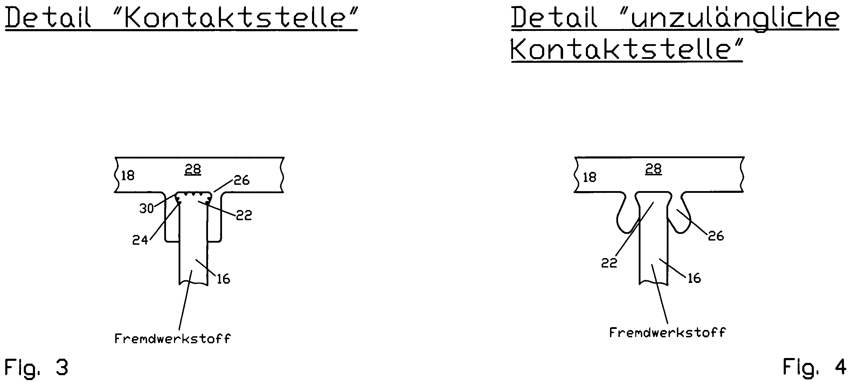

Damit ein Aufschrumpfen des ersten Kunststoffmaterials wie PVC-Material auf die Armierung 16, und zwar insbesondere auf deren verstärkten Längsrändern 22 erfolgen kann, derart, dass der erforderliche Form- und Kraftschluss erfolgt, muss sichergestellt werden, dass die Schmelze 18 im Kontaktbereich mit der Armierung 16 später als der abgewandte Teil der Schmelze abkühlt. Werden diese Nebenbedingungen nicht eingehalten, so ist die Gefahr eines Lösens der Armierung 16 gegeben. Dies soll anhand der Fig. 3 und 4 verdeutlicht werden.

So ist in Fig. 4 ein Abschnitt der quasi eine Knochenform aufweisenden Armierung 16 dargestellt, die im Bereich eines Längsrandes 22 verstärkt ist, also einen größeren Querschnitt als zwischen den Längsrändern 22 aufweist. Es ergibt sich eine Knochenform mit längsrandseitiger Verstärkung, die struktur- oder lamellenartig (s. Einschnitte 24) ausgebildet sein kann, damit sich beim Umschließen für die Schmelze 18 eine große Kontaktfläche zur Verfügung stellt und folglich eine sichere Fixierung durch Form- und Kraftschluss ermöglicht wird.

Damit die Schmelze 18 den verstärkten Längsrand 22 im hinreichenden Umfang umschließt, also quasi umklammert, muss sichergestellt sein, dass die Schmelze 18 im armierungsseitig verlaufenden Bereich 26 später abkühlt als im entfernten Bereich 28, da anderenfalls ein Ablösen aufgrund der Schrumpfung erfolgen kann, wie rein prinzipiell durch die Fig. 4 verdeutlicht werden soll.

Somit ist es erforderlich, dass die Armierung 16 derart temperiert mit der Schmelze 18 in Kontakt gelangt, dass der gewünschte Schrumpfprozess erfolgt oder sogar gefördert wird. Hierzu sollte die Temperatur der Armierung an der Kontaktstelle bzw. im Kontaktstellenbereich 30 in etwa die Temperatur der Schmelze 18 aufweisen. Um dies zu ermöglichen, ist erfindungsgemäß vorgesehen, dass die Armierung 16 vor Eintritt in die Düse 14 einer überwachten Vorerwärmung unterzogen wird. Hierzu kann die Armierung 16 jeweils ein Heizelement 32 durchsetzen, um auf die gewünschte Temperatur erwärmt zu werden, wobei sicherzustellen ist, dass die Eigensteifigkeit der Armierung 16 verbleibt.

Die Temperatur der Armierung 16 beim Eintritt in die Düse 14 wird von der Leitfähigkeit des Materials der Armierung 16, von der Verweilzeit der Armierung 16 in der Düse 14 und von der Massetemperatur (Verarbeitungstemperatur) des ersten Kunststoffmaterials wie PVC abhängig gemacht mit der Zielrichtung, dass die Armierung 16 zum Zeitpunkt des Zusammentreffens mit der Schmelze deren Temperatur oder in etwa deren Temperatur aufweist.

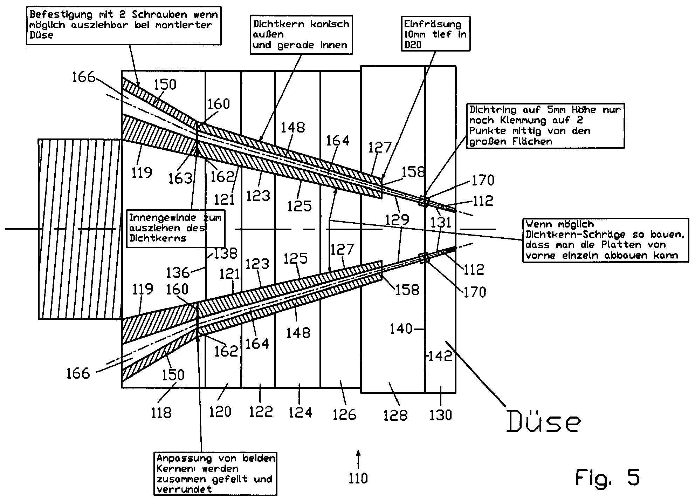

Ein bevorzugter Aufbau der die Armierung 16 und die Schmelze 18 führenden Düse 14 ist den Fig. 5 bis 9 zu entnehmen, aufgrund derer die Möglichkeit besteht, ausführungsbedingte Verunreinigungn in den die Armierung 16 führenden Kanälen zu vermeiden bzw. Reinigungszeiten von prozessbedingten Verunreinigungen im Vergleich zu bekannten Düsen zu reduzieren, wobei vermieden wird, dass die gesamte Düse 14 zum Reinigen der die Armierung 16 führenden Kanäle zerlegt werden muss.

Die der Fig. 5 zu entnehmende und mit dem Bezugszeichen 110 gekennzeichnete Extrusionswerkzeugdüse ist ebenfalls Bestandteil einer Extrusionsanlage, die - entsprechend üblichem Aufbau - zumindest einen Extruder aufweist, von dem der schmelzflüssige thermoplastische Kunststoff 18 wie PVC der als Formgebungseinrichtung wirkenden Extrusionswerkzeugdüse 110 zugeführt wird. Der Extrusionswerkzeugdüse 110 ist eine Kühleinrichtung bzw. Kalibriereinrichtung nachgeordnet. Es schließt sich üblicherweise ein nachgeordneter Raupenzug an, der dazu dient, den Gegenstand wie das Hohlprofil ausgehend vom Extruder über die Extrusionswerkzeugdüse 110 und die Kühl- und Kalibriereinrichtung abzuziehen. Insoweit wird jedoch auf hinlänglich bekannte Anlagen und Konstruktionen verwiesen, die ein Durchschnittsfachmann kennt.

In der rein prinzipiell in Fig. 5 dargestellten Extrusionswerkzeugdüse 110 sind ebenfalls rein prinzipiell zwei zweite Kanäle 112 eingezeichnet, über die die Armierung 16 in Form des eigensteifen Materials zugeführt wird, das im nicht dargestellten Austrittsbereich der Extrusionswerkzeugdüse 110 teilweise von dem in einem in Fig. 5 nicht dargestellten ersten Kanal zugeführten schmelzflüssigen ersten thermoplastischen Kunststoff umschlossen wird. Dabei dient das eigensteife und über die zweiten Kanäle 112 zugeführte Material insbesondere als Armierung für das Hohlkammertür- oder - fensterprofil, wie dieses der WO-A-2009/098069 zu entnehmen ist, auf deren Offenbarung ausdrücklich Bezug genommen wird. Die Armierung weist eine Streifen-oder Bandform mit längsrandseitigen Verstärkungen auf, auf die der thermoplastische Kunststoff aufschrumpft, der in dem oder den ersten Kanälen fließt und insbesondere aus PVC besteht.

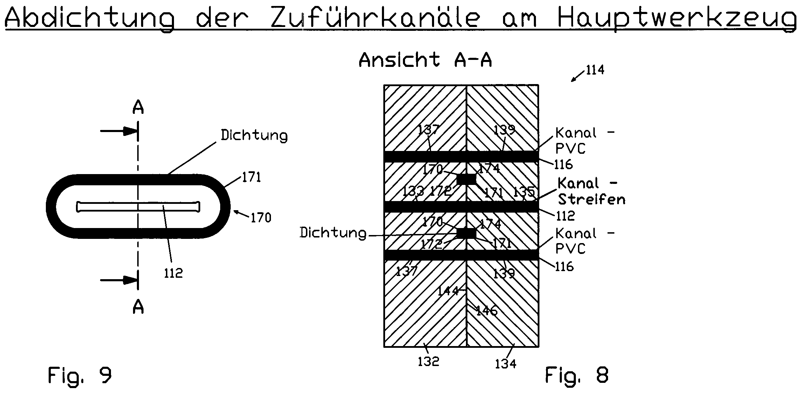

Rein prinzipiell sind der Fig. 8, der ein Ausschnitt einer weiteren Ausführungsform einer Extrusionswerkzeugdüse 114 zu entnehmen ist, ein das eigensteife Material führender zweiter Kanal 112 und zwei erste Kanäle 116 zu entnehmen, über die das schmelzflüssige thermoplastische Kunststoffmaterial wie PVC geführt wird, um sodann entsprechend der Erläuterungen in der WO-A-2009/098069 abschnittsweise das die Armierung bildende eigensteife Material formschlüssig zu umgeben. Es erfolgt bevorzugterweise ein Aufschrumpfen auf die verdickten Längsränder der streifen- oder bandförmigen Armierung 16.

Wie sich aus den Fig. 5 und 8 ergibt, ist - ebenfalls nach bekannter Bauart - die Extrusionswerkzeugdüse 110 bzw. 114 aus Düsenplatten oder Düsensegmenten zusammengesetzt, die mit den Bezugszeichen 118, 120, 122, 124, 126, 128, 130 bzw. 132, 134 gekennzeichnet sind. Die einzelnen Platten 118, 120, 122, 124, 126, 128, 130 bzw. 132, 134 liegen mit einander zugewandten Segmentflächen aufeinander, von denen beispielhaft einige mit den Bezugszeichen 136, 138, 140, 142 bzw. 144, 146 gekennzeichnet sind.

Jedes Segment bzw. jede Platte 118, 120, 122, 124, 126, 128, 130 bzw. 132, 134 weist eine Durchgangsöffnung bzw. -bohrung auf, die bei zusammengesetzten Platten 118, 120, 122, 124, 126, 128, 130 bzw. 132, 134 fluchtend ineinander übergehen und unmittelbar den zweiten Kanal 112 oder mittelbar diesen begrenzen. Mittelbar bedeutet, dass Abschnitte des zweiten Kanals 112 entsprechend der Darstellung in Fig. 5 innerhalb von Einsätzen 148, 150 verlaufen, die in den Durchgangsöffnungen der Platten 118, 120, 122, 124, 126, 128 eingesetzt sind. Die entsprechenden Durchgangsöffnungen sind mit den Bezugszeichen 119, 121, 123,1 25, 127, 129, 131 bzw. 133, 135 gekennzeichnet.

Der Querschnitt der Durchgangsöffnungen, in denen kein Einsatz verläuft bzw. kein Abschnitt dieser verläuft, die jedoch in die die Einsätze aufweisenden Durchgangsöffnungen übergehen, entspricht dem Querschnitt der Armierung 16. Gleiches gilt für die Durchtrittsöffnungen in den Einsätzen, die Abschnitte des zweiten Kanals bilden.

Die ersten Kanäle 116 werden üblicherweise unmittelbar von entsprechenden Durchgangsöffnungen 137, 139 in den Platten 132, 134 begrenzt.

Die Querschnitte der Durchgangsöffnungen, in denen kein Einsatz bzw. kein Abschnitt eines solchen verläuft, die jedoch in die die Einsätze aufweisenden Durchgangsöffnungen übergehen, weisen im Ausführungsbeispiel eine Langlochgeometrie auf, so dass entsprechend die eine Leistengeometrie aufweisende Armierung geführt werden kann, und zwar vorzugsweise mit Spiel.

Die Einsätze 148, 150, die Abschnitte des zweiten Kanals 112 umgeben, also begrenzen, können in die Platten 118, 120, 122, 124, 126, 128 eingesetzt bzw. aus diesen entfernt werden, ohne dass die Platten 118, 120, 122, 124, 126, 128 voneinander getrennt werden. Somit ist ein Reinigen der von den Einsätzen 148, 150 umgebenen Abschnitte der zweiten Kanäle 112 möglich, ohne dass die Extrusionswerkzeugdüse 110, 114 und damit die Gesamtanlage über einen längeren Zeitraum nicht genutzt werden kann. Ein Austausch der Einsätze 148, 150 und damit ein Stillstand der Gesamtanlage dauert ca. 15 bis 20 Minuten im Vergleich zu üblichen Stillstandszeiten von 3 bis 4 Stunden, wenn die gesamte Extrusionswerkzeugdüse 110, 114 auseinander gebaut werden muss, um die zweiten Kanäle 112 zu reinigen.

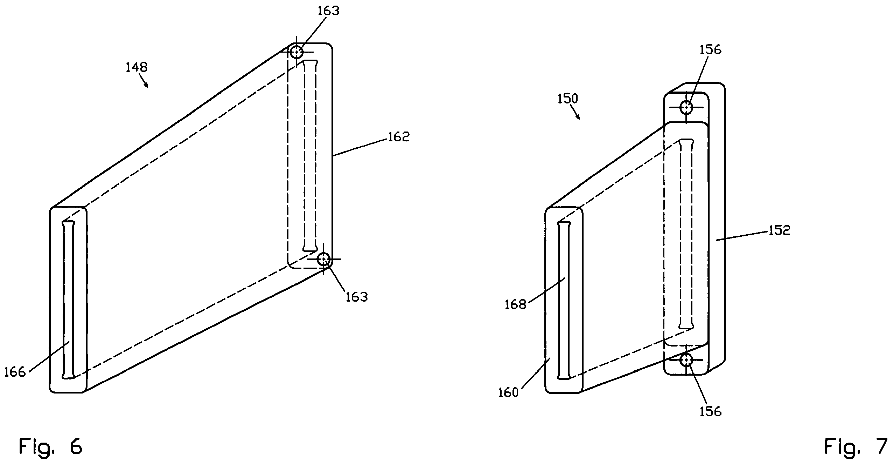

Um ein einfaches Einsetzen und insbesondere Herausziehen aus den Durchgangsbohrungen 118, 120, 122, 124, 126, 28 zu ermöglichen, weisen die Einsätze 148, 150 außenseitig in Längsrichtung betrachtet zumindest abschnittsweise eine Konusform auf, wie sich auch aus den Fig. 6 und 7 ergibt, in denen beispielhaft der erste Einsatz 148 und der zweite Einsatz 150 dargestellt sind.

Abweichend von der Prinzipdarstellung gemäß Fig. 5 weist der zweite oder äußere Einsatz 150 außenseitig einen umlaufenden Flansch 152 auf, um den zweiten Einsatz 150 mit der äußeren Platte 118 mittels Schrauben zu verbinden, die entsprechende Bohrungen 154, 156 des Flansches 152 durchsetzen.

Der erste oder innere Einsatz 148 wird in der Extrusionswerkzeugdüse 110 zwischen einem in der Platte 128 durch Einfräsung ausgebildeten Absatz 158 und innerer Stirnfläche 160 des zweiten Einsatzes 150 kraftschlüssig fixiert.

Um das Herausziehen des ersten Einsatzes 148 zu erleichtern, wird dessen äußere Stirnfläche 162 von Auszugsgewinden 163 durchsetzt, in die zum Herausziehen des ersten Einsatzes 148 entsprechende Schrauben eingedreht werden.

Um einen bündigen Übergang zwischen den von dem ersten Einsatz 148 und zweiten Einsatz 150 umgebenen Abschnitten 164, 166 des zweiten Kanals 112 sicherzustellen, werden diese gemeinsam gefeilt und verrundet.

Erstreckt sich der erste Einsatz 148 über insgesamt 6 Platten 118, 120, 122, 124, 126, 128, so kann eine andere Erstreckung gewählt werden. Gleiches gilt für den zweiten Einsatz 150.

Wie die Fig. 5 zeigt, schließen die in den Einsätzen 148, 150 verlaufenden Abschnitte 164, 166 des zweiten Kanals 112 einen Winkel ein, der von 180° abweicht. Wird der Kanal 112 von mehreren Einsätzen gebildet, so kann insgesamt ein gekrümmter Verlauf erzielt werden, durch den eine Armierung tangential dem ersten Kanal zugeführt wird, in den das schmelzflüssige thermoplastische Kunststoffmaterial fließt, das vor dem Zuführen der Armierung 16 in dessen Längsrandbereichen aufgeschrumpft wird, sofern die Armierung eine Geometrie aufweist, wie diese anhand der Fig. 3 und 4 erläutert worden ist.

Es besteht jedoch auch die Möglichkeit, dass der innerhalb eines Einsatzes verlaufende Kanalabschnitt selbst einen gekrümmten bzw. gebogenen Verlauf aufweist, ohne dass die Außenform des Einsatzes von der zuvor beschriebenen Geometrie abweicht.

Es ist darauf hinzuweisen, dass die die Einsätze betreffende Lehre bzw. Ausgestaltung der Extrusionsdüse einen erfinderischen Gehalt aufweist, ohne dass die Düse Kanäle für voneinander abweichende Kunststoffmaterialien aufweisen muss. Vielmehr sind entsprechend der erfindungsgemäßen Lehre die Einsätz für jedwede Extrusionsdüsen geeignet.

Aus dem Ausschnitt der Extrusionswerkzeugdüse 114 gemäß Fig. 8 ergibt sich, dass der erste Kanal 112 nicht von einem Einsatz umgeben ist. Hierdurch besteht das Risiko, dass aus den ersten Kanälen 116 schmelzflüssiges thermoplastisches Material entlang der aufeinander liegenden Segmentflächen 144, 146 zu dem zweiten Kanal 112 fließt mit der Folge, dass dieser verschmutzt. Um dies zu vermeiden, ist in eigenerfinderischer Ausgestaltung vorgesehen, dass der zweite Kanal 112 von einer Dichtung 170 umlaufend umgeben ist, wie sich sowohl aus den Fig. 8 und 9 als auch aus der Fig. 5 ergibt. Selbstverständlich könnte auch der erste Kanal 116 von einer entsprechenden Dichtung 170 umgeben sein. Hierzu ist vorgesehen, dass in den aufeinanderliegenden Segmentflächen 144, 146 der jeweilige Durchtrittspunkt des zweiten Kanals 112 umlaufend von einer Nut 172, 174 umgeben ist, die bei aufeinander liegenden Segmentplatten 132, 134 fluchtend ineinander übergehen. In den von den Nuten 172, 174 begrenzten Ringraum wird sodann ein Dichtelement 171 eingesetzt, das einen größeren Ausdehnungskoeffizienten als die Düsensegmente oder -platten 132, 134 aufweist. Durch die diesbezügliche Maßnahme ist sichergestellt, dass in den zweiten Kanal 112 kein schmelzflüssiges Material aus dem zweiten Kanal 116 eindringen kann. Diesbezügliche Maßnahmen sind selbstverständlich im Bereich der Segmentflächen wie den Segmentflächen 136, 138 nicht erforderlich, die von dem ersten bzw. zweiten Einsatz 148, 150 durchsetzt werden.

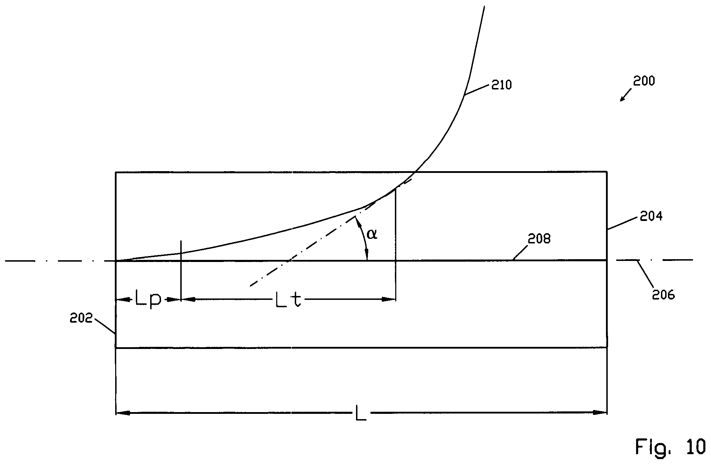

Anhand der Fig. 10, werden bevorzugte Geometrieverhältnisse erläutert, die für die erfindungsgemäßen Lehren gelten, ohne dass hierdurch eine Einschränkung erfolgen soll. So ist rein prinzipiell eine Exrusionsdüse 200 dargestellt, dessen Länge sich zwischen Düsenaustrittsöffnung verlaufender Stirnfläche 702 und rückseitiger Stirnfläche 204 erstreckt, an der der Extruderflansch anliegt. Die Längsachse der Düse 200 ist mit dem Bezugszeichen 206 gekennzeichnet. Aus Gründen der Vereinfachung verläuft der das thermoplastische schmelzflüssige Kunststoffmaterial führende erste Kanal im Ausführungsbeispiel entlang der Längsachse 206. Der Kanal ist mit dem Bezugszeichen 208 versehen. Über eine Seite der Düse 200 wird der die Armierung führende zweite Kanal 210 in einem Abstand Lp vor Austritt aus der Düse 200 in den ersten Kanal 208 eingeführt, wobei der Abstand Lp 0,5 % bis 10 % der Länge der Düse 200 beträgt. Der zweite Kanal 210 verläuft über eine Länge Pp parallel zu dem ersten Kanal 208, wobei Pp zwischen 0,5 % und 10 % der Länge L der Düse 200 betragen sollte.

Der zweite Kanal 210 wird tangential an den ersten Kanal 208 herangeführt, um sodann vor Eintritt in den ersten Kanal 208 parallel zu diesem geführt zu werden. Die Länge L_{T} des zweiten Kanals 210, betrachet in Projektion auf die Längsachse 206 der Düse 200, beträgt 10 % bis 90 % der Länge L der Düse 200, und zwar ausgehend von einer zu dem zweiten Kanal 210 anliegenden Tangente, die die Längsachse 206 unter einem Winkel α mit 70° ≤ α ≤ 80° schneidet.

Die Länge LT sollte zwischen 40 % und 80 % der Länge L der Düse 200 betragen, sofern die durch den zweiten Kanal 210 geführte Armierung aus PBT oder PET besteht, wobei bevorzugterweise faser- oder glasfaserverstärktes PBT bzw. PET zum Einsatz gelangt.

Des Weiteren ist der zweite Kanal 210 in dem Bereich, in dem der zweite Kanal 210 nicht parallel zu dem ersten Kanal 208 verläuft, also in der zeichnerischen Darstellung in dem gekrümmten Bereich, derart dimensioniert, dass die Armierung beabstandet zu den Begrenzungswandungen des Kanals 208 verlaufen kann, so dass weitgehend ein Abrieb vermieden wird. Eine passgenaue Führung erfolgt erst in dem parallel verlaufenden Abschnitt im Bereich des Eintritts in den ersten Kanal 208, um zu verhindern, dass das unter hohem Druck stehende schmelzflüssige erste Kunststoffmaterial, das durch den ersten Kanal 208 fließt, in den zweiten Kanal 210 eindringen kann.

## Patentansprüche

1. Verfahren zum Herstellen von versteiften Kunststoff-Hohlprofilen in einem Co-Extrusionsverfahren, wobei schmelzflüssiges thermoplastisches erstes Kunststoffmaterial, wie PVC, einer Extrusionswerkzeugdüse zugeführt wird und eine aus einem zweiten Kunststoffmaterial, wie Polybuthylenterephthalat (PBT), Polyethylenterephthalat (PET) oder Mischungen dieser, bestehende Armierung (16) in der Extrusionswerkzeugdüse (14, 110, 114, 210) dem ersten Kunststoffmaterial zugeführt wird, wobei die Armierung von dem ersten Kunststoffmaterial bereichsweise kraft- und formschlüssig umgeben wird,
**dadurch gekennzeichnet,**
**dass** eine eigensteife Armierung (16) über einen Kanal bei Umgebungsdruck der Extrusionsdüse zugeführt wird,
**dass** die Armierung (16) vor Eintritt in die Extrusionswerkzeugdüse (14, 110, 114, 210) unter Beibehaltung der Eigensteifigkeit temperiert wird,
**dass** die eigensteife Armierung in der Extrusionswerkzeugdüse dem ersten Kunststoffmaterial zugeführt wird,
wobei die eigensteife Armierung, die eine höhere Verarbeitungstemperatur als das erste Kunststoffmaterial aufweist, beim Zuführen zu dem schmelzflüssigen thermoplastischen ersten Kunststoffmaterial eine Temperatur aufweist mit T₂ - 10 K ≤ T₁ ≤ T₂ mit T₂ = Temperatur des ersten Kunststoffmaterials beim Eintritt der Armierung.

2. Verfahren nach Anspruch 1,
**dadurch gekennzeichnet,**
**dass** das erste Kunststoffmaterial nach Zuführen der Armierung (16) derart abgekühlt wird, dass armierungsseitiges Kunststoffmaterial später abkühlt als armierungsfernliegendes Kunststoffmaterial.

3. Verfahren nach Anspruch 1 oder 2,
**dadurch gekennzeichnet,**
**dass** die Armierung (16) innerhalb der Extrusionswerkzeugdüse (14, 110, 114, 210) tangential an Extrusionsrichtung des ersten Kunststoffmaterials herangeführt wird.

4. Verfahren nach zumindest einem der vorhergehenden Ansprüche,
**dadurch gekennzeichnet,**
**dass** die Armierung (16) mittels Heizstrahler (32), Mikrowellen, Heißluft, Heizspiegel oder Induktionsheizung temperiert wird.

5. Verfahren nach zumindest einem der vorhergehenden Ansprüche,
**dadurch gekennzeichnet,**
**dass** die Armierung (16) in einem Abstand Lp zur Extrusionswerkzeugdüsenaustrittsöffnung dem ersten Kunststoffmaterial zugeführt wird, wobei 0,05 L ≤ Lp ≤ 0,1 L mit L = Länge der Extrusionswerkzeugdüsenlänge ist.

6. Verfahren nach Anspruch 1,
**dadurch gekennzeichnet,**
**dass** als Armierung (16) eine band- oder streifenförmige Armierung verwendet wird.

## Claims

1. Method for producing reinforced plastic hollow profiles in a co-extrusion process, wherein molten thermoplastic first plastic material, such as PVC, is fed to an extrusion die nozzle, and a reinforcement (16) consisting of a second plastic material, such as polybutylene terephthalate (PBT), polyethylene terephthalate (PET) or mixtures thereof, is fed to the first plastic material in the extrusion die nozzle (14, 110, 114, 210), wherein the reinforcement is encompassed in certain areas by the first plastic material in a frictional and interlocking manner,
**characterized in that**
an inherently rigid reinforcement (16) is fed via a channel to the extrusion nozzle at ambient pressure,
that the reinforcement (16) is tempered before entering the extrusion die nozzle (14, 110, 114, 210) while maintaining the inherent rigidity,
that the inherently rigid reinforcement is fed to the first plastic material in the extrusion die nozzle,
wherein, when feeding to the molten thermoplastic first plastic material, the inherently rigid reinforcement, which has a higher processing temperature than the first plastic material, has a temperature with T₂ - 10 K ≤ T₁ ≤ T₂ where T₂ = Temperature of the first plastic material when the reinforcement enters.

2. Method according to Claim 1,
**characterized in that**
after feeding-in the reinforcement (16), the first plastic material is cooled down in such a way that plastic material on the reinforcement side cools down later than plastic material which is remote from the reinforcement.

3. Method as claimed in Claim 1 or 2,
**characterized in that**
within the extrusion die nozzle (14, 110, 114, 210), the reinforcement (16) is fed in tangentially to the extrusion direction of the first plastic material.

4. Method according to at least one of the preceding claims,
**characterized in that**
the reinforcement (16) is tempered by means of radiant heaters (32), microwaves, hot air, heat reflectors or induction heating.

5. Method according to at least one of the preceding claims,
**characterized in that**
the reinforcement (16) is fed to the first plastic material at a distance Lp from the extrusion die nozzle outlet opening, wherein 0.05 L ≤ Lp ≤ 0.1 L where L is the length of the extrusion die nozzle.

6. Method according to Claim 1,
**characterized in that**
a tape or strip-shaped reinforcement is used as the reinforcement (16).

## Revendications

1. Procédé de fabrication de profilés creux renforcés en matière synthétique dans un procédé de co-extrusion, sachant qu'un premier matériau synthétique thermoplastique et thermofusible, tel que le PVC, est distribué à une filière d'extrusion et qu'un renforcement (16) constitué d'un deuxième matériau synthétique, tel que le téréphtalate de polybutylène (PBT), le polyéthylène téréphtalate (PET) ou d'un mélange de ces composants, est ajouté au premier matériau synthétique dans la filière d'extrusion (14, 110, 114, 210), le renforcement étant entouré, par endroits, du premier matériau synthétique fixé par force et par complémentarité de forme,
**caractérisé en ce**
**qu'**un renforcement à rigidité propre (16) est distribué à la filière d'extrusion à la pression ambiante par un canal,
**que** le renforcement (16) est mis en température avant son entrée dans la filière d'extrusion (14, 110, 114, 210) tout en conservant sa rigidité propre,
**que** le renforcement à rigidité propre est ajouté au premier matériau synthétique dans la filière d'extrusion,
sachant que le renforcement à rigidité propre, qui possède une température de transformation supérieure à celle du premier matériau synthétique, présente, lors de son ajout au premier matériau synthétique thermoplastique et thermofusible, une température-telle-que T₂ - 10 K ≤ T1 ≤ T₂ où T₂ = température du premier
matériau synthétique lors de l'entrée du renforcement.

2. Procédé selon la revendication 1,
**caractérisé en ce**
**que** le premier matériau synthétique est refroidi après la distribution du renforcement (16) de telle sorte que le matériau synthétique côté renforcement refroidisse plus tard que le matériau synthétique extérieur au renforcement.

3. Procédé selon la revendication 1 ou 2,
**caractérisé en ce**
**que** le renforcement (16) soit distribué dans la filière d'extrusion (14, 110, 114, 210) tangentiellement au sens d'extrusion du premier matériau synthétique.

4. Procédé selon au moins une des revendications précédentes,
**caractérisé en ce**
**que** le renforcement (16) est mis en température au moyen d'un radiateur (32), de micro-ondes, d'air chaud, d'un miroir de soudage ou d'un chauffage à induction.

5. Procédé selon au moins une des revendications précédentes,
**caractérisé en ce**
**que** le renforcement (16) est ajouté au premier matériau synthétique à une distance Lp de l'orifice de sortie de la filière d'extrusion, sachant que 0,05 L ≤ Lp ≤ 0,1 L où L = longueur de la filière d'extrusion.

6. Procédé selon la revendication 1,
**caractérisé en ce**
**qu'**un renforcement en forme de bande ou de ruban est utilisé comme renforcement (16).
